# EUROPÄISCHE PATENTANMELDUNG

(11) **EP 4 531 224 A1**
(43) Veröffentlichungstag der Anmeldung: **02.04.2025**
(21) Anmeldenummer: 24193994.1
(22) Anmeldetag: 10.08.2024
(51) Int. Cl.: H02J 3/01, H02M 1/12, H02M 1/36

(54) **SCHALTANORDNUNG ZUM SCHALTEN EINES FILTER-KONDENSATORS**

(30) Priorität: 07.09.2023 DE 102023208638
(71) Anmelder: BSH Hausgeräte GmbH, 81739 München (DE)
(72) Erfinder: Gerhardt, Martin, 93059 Regensburg (DE); Assmann, Marc, 93309 Kelheim (DE); Krusche, Mathias, 93047 Regensburg (DE)

(57) **Zusammenfassung**

Es wird eine Schaltanordnung (120) zum Schalten eines Filter-Kondensators (141) beschrieben. Die Schaltanordnung (120) umfasst eine erste Versorgungsleitung (131) und eine zweite Versorgungsleitung (132), zwischen denen eine Versorgungsspannung (103) anliegt. Die Schaltanordnung (120) umfasst ferner eine erste elektrische Last (111), ein oder mehrere Schaltelemente (122, 221), die ausgebildet sind, die erste elektrische Last (111) mit der Versorgungsspannung (102) zu koppeln oder davon zu entkoppeln, um die erste elektrische Last (111) einzuschalten oder auszuschalten, sowie einen Filter-Kondensator (141) zur Filterung der Versorgungsspannung (103). Des Weiteren umfasst die Schaltanordnung (120) eine Steuereinheit (200), die eingerichtet ist, zu bewirken, dass der Filter-Kondensator (141) in einem Standby-Modus von der Versorgungsspannung (102) entkoppelt wird; und dass der Filter-Kondensator (141) bei Beendigung des Standby-Modus zur Begrenzung eines Ladestroms zumindest zeitweise über die erste elektrische Last (111) mit der Versorgungsspannung (103) gekoppelt wird.

## Beschreibung

Die Erfindung betrifft ein Hausgerät mit ein oder mehreren elektrischen Lasten. Insbesondere betrifft die Erfindung eine Schaltanordnung zum Schalten, insbesondere zum Einschalten, eines Filter-Kondensators zur Filterung der Versorgungsspannung für eine elektrische Last eines Hausgeräts.

Ein Hausgerät, wie z.B. eine Waschmaschine oder eine Spülmaschine oder ein Ofen, weist typischerweise einen Netzanschluss, insbesondere ein Schaltnetzteil, auf, mit dem das Hausgerät an ein Wechselstrom-Versorgungsnetz angeschlossen werden kann. Die von einem Versorgungsnetz bereitgestellte Netz- bzw. Versorgungsspannung kann Spannungsspitzen aufweisen, die durch einen Filter mit ein oder mehrere Filter-Kondensatoren beseitigt werden können, um eine gefilterte Versorgungsspannung für den Betrieb von zumindest einer elektrischen Last des Hausgeräts (z.B. von einem Wechselrichter oder von einem Magnetron) bereitzustellen.

Der Filter verursacht typischerweise auch im Standby-Modus des Hausgeräts einen gewissen elektrischen Energieverbrauch. Das vorliegende Dokument befasst sich mit der technischen Aufgabe, in bauteileffizienter Weise den Standby-Energieverbrauch eines Hausgeräts zu reduzieren.

Die Aufgabe wird durch den Gegenstand des unabhängigen Patentanspruchs gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Schaltanordnung zum Schalten eines Filter-Kondensators beschrieben. Der Filter-Kondensator kann ein Zwischenkreiskondensator sein. Alternativ oder ergänzend kann der Filter-Kondensator Teil einer Filtereinheit (z.B. eines Tiefpassfilters) sein, wobei die Filtereinheit ein oder mehrere Filter-Kondensatoren und ggf. ein oder mehrere Filter-Induktivitäten umfasst. Die Schaltanordnung kann für ein Hausgerät ausgebildet sein. Der Filter-Kondensator kann ausgebildet sein, eine Versorgungsspannung zur elektrischen Energieversorgung von ein oder mehreren elektrischen Lasten zu filtern. Alternativ oder ergänzend können der Filter-Kondensator und/oder die Filtereinheit ausgebildet sein, das Versorgungsnetz (von dem die Versorgungsspannung bereitgestellt wird) vor Störungen aus der Schaltanordnung und/oder aus dem Hausgerät zu schützen.

Die Schaltanordnung umfasst eine erste Versorgungsleitung und eine zweite Versorgungsleitung, zwischen denen eine (ggf. ungefilterte) Versorgungsspannung anliegt. Die Versorgungsspannung ist bevorzugt eine Wechselspannung (z.B. eine 230V, 50Hz Netzspannung). Die Versorgungsspannung kann (direkt) aus einem elektrischen Versorgungsnetz bereitgestellt werden.

Des Weiteren umfasst die Schaltanordnung eine erste elektrische Last. Die erste Last kann ein Heizelement, insbesondere einen Heizwiderstand, umfassen. Die erste Last kann ausgebildet sein, in dem Hausgerät eine bestimmte Funktion bereitzustellen (z.B. das Aufheizen von Wasser oder das Aufheizen eines Garraums des Hausgeräts). Die erste Last kann eine ohmsche Last sein.

Die Schaltanordnung umfasst ferner ein oder mehrere Schaltelemente, die ausgebildet sind, die erste elektrische Last mit der Versorgungsspannung zu koppeln oder davon zu entkoppeln, um die erste elektrische Last einzuschalten (und um damit die Funktion des Hausgeräts bereitzustellen) oder auszuschalten. Die in diesem Dokument beschriebenen Schaltelemente der Schaltanordnung können jeweils ein halbleiterbasiertes Schaltelement oder ein Relais umfassen.

Des Weiteren umfasst die Schaltanordnung einen Filter-Kondensator zur Filterung der Versorgungsspannung. Ein erster Pol des Filter-Kondensators kann (ggf. direkt) mit der ersten Versorgungsleitung gekoppelt sein. Der Filter-Kondensator kann ausgebildet sein, auf Basis der Versorgungsspannung eine gefilterte Versorgungsspannung bereitzustellen. Die Schaltanordnung kann ferner eine zweite elektrische Last und ein drittes Schaltelement umfassen, wobei das dritte Schaltelement ausgebildet ist, die zweite Last, insbesondere einen ersten Pol der zweiten Last, mit der gefilterten Versorgungsspannung zu koppeln oder davon zu entkoppeln. Die zweite elektrische Last kann z.B. einen Wechselrichter (zum Betrieb eines elektrischen Motors) oder ein Magnetron umfassen (z.B. für einen Mikrowellenofen).

Die Schaltanordnung umfasst ferner eine Steuereinheit (z.B. einen Mikroprozessor), die eingerichtet ist, zu bewirken, dass der Filter-Kondensator in einem Standby-Modus (des Hausgeräts) von der Versorgungsspannung entkoppelt wird. So kann der Energieverbrauch der Schaltanordnung und/oder des Hausgeräts im Standby-Modus reduziert werden.

Die Steuereinheit ist ferner eingerichtet, zu bewirken, dass der Filter-Kondensator bei Beendigung des Standby-Modus zur Begrenzung des Ladestroms (der in den Filter-Kondensator fließt) zumindest zeitweise (z.B. für eine Lade-Zeitdauer) über die erste elektrische Last mit der Versorgungsspannung gekoppelt wird.

Es kann somit die erste Last (zusätzlich zu der Funktion innerhalb des Hausgeräts) als ladestromlimitierendes Element verwendet werden. So kann in effizienter Weise der Standby-Energieverbrauch eines Hausgeräts reduziert werden.

Die Schaltanordnung kann ein viertes Schaltelement umfassen, das ausgebildet ist, den zweiten Pol des Filter-Kondensators mit der Versorgungsspannung (insbesondere mit der zweiten Versorgungsleitung) zu koppeln oder davon zu entkoppeln. Die Steuereinheit kann eingerichtet sein, zu bewirken, dass das vierte Schaltelement geöffnet wird, um den Filter-Kondensator in dem Standby-Modus von der Versorgungsspannung, insbesondere um den zweiten Pol des Filter-Kondensators von der zweiten Versorgungsleitung, zu entkoppeln. So kann der Filter-Kondensator in effizienter Weise schaltbar gemacht werden, um den Standby-Energieverbrauch zu reduzieren. Dabei kann in besonders effizienter Weise das (vierte) Schaltelement verwendet werden, das ansonsten für das Schalten der zweiten Last verwendet würde.

Die Schaltanordnung kann ein zweites Schaltelement umfassen, das ausgebildet ist, den zweiten Pol der ersten Last mit der zweiten Versorgungsleitung zu koppeln oder davon zu entkoppeln. Des Weiteren kann die Schaltanordnung ein Wechsel-Schaltelement umfassen, das ausgebildet ist, die erste Versorgungleitung selektiv mit dem ersten Pol der ersten Last oder mit dem zweiten Pol des Filter-Kondensators zu koppeln.

Die Steuereinheit kann eingerichtet sein, zu bewirken, dass
- durch das zweite Schaltelement der zweite Pol der ersten Last mit der zweiten Versorgungsleitung gekoppelt wird; und
- durch das Wechsel-Schaltelement der erste Pol der ersten Last mit dem zweiten Pol des Filter-Kondensators gekoppelt wird,
sodass der Filter-Kondensator bei Beendigung des Standby-Modus zur Begrenzung des Ladestroms über die erste elektrische Last mit der Versorgungsspannung gekoppelt wird. So kann der Ladestrom in besonders effizienter und zuverlässiger Weise (durch den ohmschen Widerstand der ersten Last) begrenzt werden.

Die Steuereinheit kann eingerichtet sein, nach der Lade-Zeitdauer (wobei die Lade-Zeitdauer z.B. eine Sekunde oder weniger ist) zu bewirken, dass das vierte Schaltelement geschlossen wird, sodass der zweite Pol des Filter-Kondensators an der ersten Last vorbei mit der zweiten Versorgungsleitung gekoppelt wird. Ferner kann die Steuereinheit eingerichtet sein, nach der Lade-Zeitdauer zu bewirken, dass durch das Wechsel-Schaltelement der erste Pol der ersten Last mit der ersten Versorgungsleitung gekoppelt wird (und somit von dem zweiten Pol des Filter-Kondensators entkoppelt wird). So kann die Ladestrombegrenzung in effizienter und zuverlässiger Weise beendet werden, um einen effizienten Betrieb der zweiten Last zu ermöglichen.

Die Steuereinheit kann eingerichtet sein, den Filter-Kondensator und/oder die Filtereinheit anhand folgender Reihenfolge von Schaltvorgängen mit der Versorgungsspannung und/oder mit dem Versorgungsnetz zu koppeln:
- das Wechsel-Schaltelement kann (als Ausgangsposition) in einer Ruhestellung sein (bei der das Wechsel-Schaltelement den ersten Pol der ersten Last mit dem zweiten Pol des Filter-Kondensators koppelt);
- es kann das zweite Schaltelement geschlossen werden, um den zweiten Pol der ersten Last mit der zweiten Versorgungsleitung zu koppeln (um das Laden des Filter-Kondensators zu bewirken);
- nach Ablauf der Lade-Zeitdauer kann das vierte Schaltelement geschlossen werden (während das zweite Schaltelement weiterhin geschlossen ist, und/oder während das Wechselschaltelement weiterhin den ersten Pol der ersten Last mit dem zweiten Pol des Filter-Kondensators koppelt); und
- im Anschluss an das Schließen des vierten Schaltelements kann das zweite Schaltelement geöffnet werden (wenn die erste Last nicht betrieben werden soll).

Ferner kann das Wechsel-Schaltelement geschaltet werden, um den ersten Pol der ersten Last mit der ersten Versorgungsleitung zu koppeln.

So kann in zuverlässiger Weise (ohne Unterbrechung der Spannung an dem Filter-Kondensator, und somit ohne Entladen des Filter-Kondensators) eine Übergabe des Stroms von dem zweiten Schaltelement an das vierte Schaltelement bewirkt werden,

Die Steuereinheit kann eingerichtet sein, zu ermitteln, ob die erste elektrische Last betrieben werden soll oder nicht. Es kann dann in Abhängigkeit von dem Ermitteln bewirkt werden, dass das zweite Schaltelement geschlossen ist, um die elektrische Last zu betreiben, oder geöffnet ist, um die elektrische Last nicht zu betreiben. Es kann somit weiterhin (nach Beendigung des Standby-Modus) eine zuverlässige Steuerung der ersten Last bewirkt werden.

Die Schaltanordnung kann eine Sicherung (z.B. eine Schmelzsicherung) umfassen. Dabei kann ein erster Pol der Sicherung mit dem vierten Schaltelement und ein zweiter Pol der Sicherung (direkt) mit der zweiten Versorgungsleitung gekoppelt sein. Das vierte Schaltelement kann ausgebildet sein, den zweiten Pol des Filter-Kondensators über die Sicherung mit der zweiten Versorgungsleitung zu koppeln. Durch die Sicherung kann ein zuverlässiger Kurschlussschutz (z.B. für einen Kurzschluss des Wechsel-Schaltelements) bereitgestellt werden, um die Sicherheit der Schaltanordnung weiter zu erhöhen.

Gemäß einem weiteren Aspekt wird ein Hausgerät beschrieben, das die in diesem Dokument beschriebene Schaltanordnung umfasst. Das Hausgerät kann ausgebildet sein, die erste elektrische Last sowohl zur Begrenzung des Ladestroms in den Filter-Kondensator bei Aktivierung des Hausgeräts aus dem Standby-Modus als auch zur Bereitstellung einer Funktion des Hausgeräts nach Aktivierung des Hausgeräts zu nutzen. Die Funktion kann eine Heizfunktion zum Aufheizen von Wasser und/oder zum Aufheizen des Garraums des Hausgeräts umfassen. So kann ein besonders bauteileffizientes und energieeffizientes Hausgerät bereitgestellt werden.

Es ist zu beachten, dass jegliche Aspekte der in diesem Dokument beschriebenen Schaltanordnung und des in diesem Dokument beschriebenen Hausgeräts in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen
Figur 1a ein Blockdiagramm eines beispielhaften Hausgeräts;
Figur 1b eine beispielhafte Schaltanordnung zum Schalten einer elektrischen Last; und
Figur 2 eine weitere beispielhafte Schaltanordnung zum Schalten einer elektrischen Last.

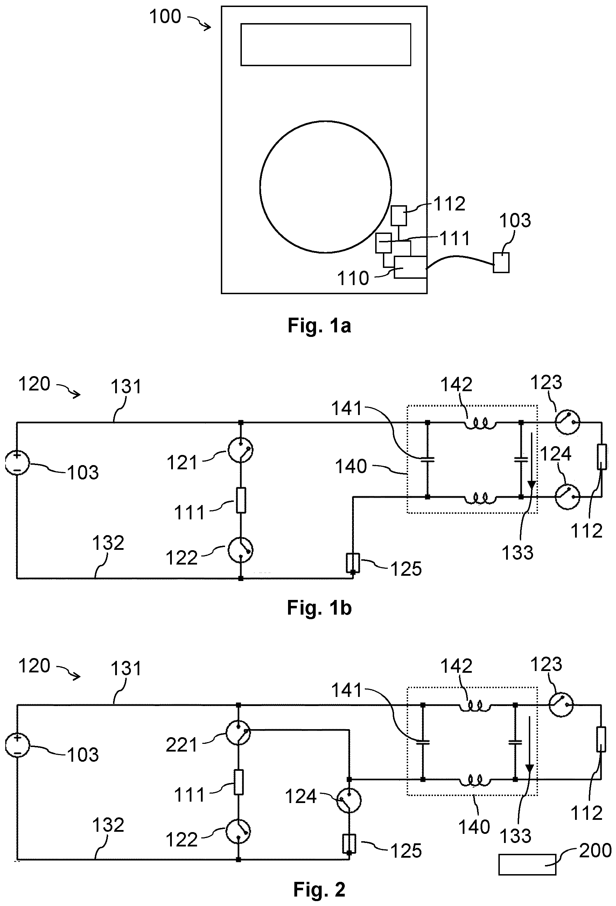

Wie eingangs dargelegt, befasst sich das vorliegende Dokument mit der technischen Aufgabe, den Standby-Stromverbrauch eines Hausgeräts in effizienter und zuverlässiger Weise zu reduzieren. In diesem Zusammenhang zeigt Fig. 1a ein beispielhaftes Hausgerät 100, z.B. eine Waschmaschine, mit einem Netzanschluss 110, insbesondere mit einem Schaltnetzteil, über das das Hausgerät 100 an eine Wechselstrom-Versorgungsspannung 103 angeschlossen werden kann. Über den Netzanschluss 110 kann die Wechselstrom-Versorgungsspannung 103 einer ersten elektrischen Last 111 und einer zweiten elektrischen Last 112 bereitgestellt werden.

Die erste elektrische Last 111 kann eine ohmsche Last sein, wie z.B. ein Heizelement, etwa ein Heizwiderstand, mit dem z.B. Wasser für den Betrieb des Hausgeräts 100 erwärmt werden kann oder mit dem ein Verarbeitungsraum (z.B. der Garraum) des Hausgeräts 110 beheizt werden kann. Die erste elektrische Last 111 ist typischerweise nicht anfällig für Schwankungen und/oder Spitzen der Versorgungsspannung 103. Andererseits kann die zweite elektrische Last 112 anfällig für Schwankungen und/oder Spitzen der Versorgungsspannung 103 sein.

Fig. 1b zeigt eine beispielhafte Schaltanordnung 120 mit der die erste und die zweite Last 111, 112 geschaltet, insbesondere jeweils einzeln ausgeschaltet oder eingeschaltet, werden können. Die erste elektrische Last 111 kann über ein erstes Schaltelement 121 und ein zweite Schaltelement 122 mit den Versorgungsleitungen 131, 132 der Versorgungsspannung 103 verbunden oder davon entkoppelt werden. Das erste Schaltelement 121 ist zwischen (dem ersten Pol) der ersten elektrischen Last 111 und der ersten Versorgungsleitung 131 angeordnet, und ermöglicht es, die erste elektrische Last 111 mit der ersten Versorgungsleitung 131 zu koppeln oder davon zu entkoppeln. Das zweite Schaltelement 122 ist zwischen (dem zweiten Pol) der ersten elektrischen Last 111 und der zweiten Versorgungsleitung 132 angeordnet, und ermöglicht es, die erste elektrische Last 111 mit der zweiten Versorgungsleitung 132 zu koppeln oder davon zu entkoppeln.

Die erste Versorgungsleitung 131 kann einem Phasenleiter entsprechen und die zweite Versorgungsleitung 132 kann dem Neutralleiter entsprechen. Zum Einschalten der ersten Last 111 kann zunächst das zweite Schaltelement 122 geschlossen werden, und in einem zweiten Schritt kann das erste Schaltelement 121 geschlossen werden. Zum Ausschalten der ersten Last 111 kann zunächst das erste Schaltelement 121 geöffnet werden, und in einem zweiten Schritt kann das zweite Schaltelement 122 geöffnet werden. So kann ein sicheres Ein- und Ausschalten der ersten elektrischen Last 111 bewirkt werden.

Die zweite elektrische Last 112 ist über eine Filtereinheit 140 an der Versorgungsspannung 103 angebunden. Die Filtereinheit 140 kann ausgebildet sein, Spannungsspitzen aus der Versorgungsspannung 103 herauszufiltern. Zu diesem Zweck kann die Filtereinheit 140 die Funktion eines Tiefpassfilters aufweisen. Es kann somit an der zweite Last 112 eine gefilterte Versorgungsspannung 133 bereitgestellt werden. Die Filtereinheit 140 kann ein oder mehrere Filter-Kondensatoren 141 und/oder ein oder mehrere Filter-Induktivitäten 142 aufweisen.

Die zweite elektrische Last 112 (insbesondere der erste Pol der zweiten Last 112) kann über ein drittes Schaltelement 123 mit der (gefilterten) ersten Versorgungsleitung und die zweite Last 112 (insbesondere der zweite Pol der zweiten Last 112) kann über ein viertes Schaltelement 124 mit der (gefilterten) zweiten Versorgungsleitung gekoppelt oder davon entkoppelt werden. Dabei können zum Einschalten der zweiten elektrischen Last 112 zunächst das vierte Schaltelement 124 und anschließend das dritte Schaltelement 123 geschlossen werden. Zum Ausschalten der zweiten elektrischen Last 112 können zunächst das dritte Schaltelement 123 und anschließend das vierte Schaltelement 124 geöffnet werden.

Die Schaltanordnung 120 kann ferner eine Sicherung 125 (z.B. auf der zweiten Versorgungsleitung 132) aufweisen.

Die Filtereinheit 140 weist typischerweise auch dann einen elektrischen Energieverbrauch auf, wenn die Schaltelemente 121, 122, 123, 124 der Schaltanordnung 120 geöffnet sind (und somit die Lasten 111, 112 deaktiviert und/oder ausgeschaltet sind). Als Folge daraus wird der Standby-Energieverbrauch des Hausgeräts 100 erhöht.

Fig. 2 zeigt eine Schaltanordnung 120 zum Schalten der elektrischen Lasten 111, 112, bei der die Filtereinheit 140 von der Versorgungsspannung 103 entkoppelt werden kann, insbesondere dann, wenn die zweite Last 112 ausgeschaltet ist. Als Folge daraus kann der Standby-Energieverbrauch des Hausgeräts 100 reduziert werden. In der Schaltanordnung 120 von Fig. 2 ist das vierte Schaltelement 124 auf der zweiten Versorgungsleitung 132 zwischen der (ungefilterten) Versorgungsspannung 103 und (dem zweiten Pol) der Filtereinheit 140 angeordnet. Durch Öffnen des vierten Schaltelements 124 kann somit die Filtereinheit 140 von der Versorgungsspannung 103 entkoppelt werden. Andererseits kann durch Schließen des vierten Schaltelements 124 die Filtereinheit 140 mit der Versorgungsspannung 103 gekoppelt werden.

Das Entkoppeln der Filtereinheit 140 von der Versorgungsspannung 103 kann dazu führen, dass sich die ein oder mehreren Filter-Kondensatoren 141 zumindest teilweise oder vollständig entladen. Als Folge daraus werden die ein oder mehreren Filter-Kondensatoren 141 wieder geladen, wenn die Filtereinheit 140 bei einem Start der zweiten Last 112 wieder mit der Versorgungsspannung 103 gekoppelt wird. Das Laden der ein oder mehreren Filter-Kondensatoren 141 kann zu einem relativ hohen Ladestrom führen. Zur Begrenzung des Ladestroms kann ein ohmscher Begrenzungswiderstand verwendet werden, was jedoch zu einem zusätzlichen Bauteil und somit zu zusätzlichen Kosten führt.

In der in Fig. 2 dargestellten Schaltanordnung 120 wird die erste elektrische Last 111 als Begrenzungselement zur Begrenzung des Ladestroms beim Starten der zweiten Last 112 und/oder beim Koppeln der Filtereinheit 140 verwendet. Zu diesem Zweck kann anstelle des ersten Schaltelements 121 ein Wechsel-Schaltelement 221 verwendet werden, das ausgebildet ist, die erste elektrische Last 111 (insbesondere den ersten Pol der ersten Last 111) selektiv mit der ersten Versorgungsleitung 131 oder mit der Filtereinheit 140 (insbesondere mit dem zweiten Pol der Filtereinheit 140) zu koppeln.

In einer ersten Phase des Startvorgangs zum Starten der zweiten Last 112 können,
- das dritte Schaltelement 123 und das vierte Schaltelement 124 geöffnet sein;
- das zweite Schaltelement 122 geschlossen sein; und
- durch das Wechsel-Schaltelement 221 die erste Last 111 mit der Filtereinheit 140 gekoppelt sein.

Als Folge daraus wird in der ersten Phase des Startvorgangs der Ladestrom zum Laden der ein oder mehreren Filter-Kondensatoren 141 über die erste Last 111 geleitet, wodurch die Höhe des Ladestroms begrenzt wird. Die erste Phase kann eine Lade-Zeitdauer von einer Sekunde oder weniger, oder von 500ms oder weniger aufweisen.

In einer anschließenden zweiten Phase des Startvorgangs können,
- das vierte Schaltelement 124 geschlossen werden;
- (nachfolgend zu dem Schließen des vierten Schaltelements 124) das zweite Schaltelement 122 geöffnet werden (wenn die erste Last 111 nicht gestartet werden soll);
- ggf. das dritte Schaltelement 123 geöffnet bleiben (wenn die zweite Last 112 nicht direkt gestartet werden soll); und
- (nachfolgend zu dem Schließen des vierten Schaltelements 124) durch das Wechsel-Schaltelement 221 die erste Last 111 mit der ersten Versorgungsleitung 131 gekoppelt werden.

So kann bewirkt werden, dass die ein oder mehreren Filter-Kondensatoren 141 in effizienter Weise vollgeladen werden können (ohne Einbindung der ersten Last 111). Ferner kann so ein effizienter Betrieb der zweiten Last 112 bewirkt werden.

Für das Starten der zweiten Last 112 kann schließlich das dritte Schaltelement 123 geschlossen werden.

Das Schalten der ein oder mehreren Schaltelemente 122, 123, 124, 221 kann durch eine Steuereinheit 200 (z.B. durch einen Mikroprozessor) der Schaltanordnung 120 bewirkt werden. Die Schaltelemente 122, 123, 124, 221 können jeweils zumindest ein halbleiterbasiertes Schaltelement und/oder ein Relais umfassen.

Politische Vorgaben sehen vor, dass Hausgeräte, wie z.B. Öfen, Kühlschränke, Kaffeemaschinen etc., nur 0.3W im Standby-Modus aufnehmen dürfen. Eine Möglichkeit zur Reduzierung des Standby-Energieverbrauchs ist es, die ein oder mehreren X-Kondensatoren 141 eines Hausgeräts 100 schaltbar auszuführen, wodurch jedoch relativ hohe kurzzeitige Ladeströme bewirkt werden können. Zur Begrenzung der Ladeströme kann ein ladestromlimitierendes Element verwendet werden, wie z.B. ein Widerstand, ein PTC (Positive Temperature Coefficient Thermistor), oder ein NTC (Negative Temperature Coefficient Thermistor), der in Reihe mit den ein oder mehreren Kondensatoren 141 geschaltet wird. Dieses ladestromlimitierende Element sollte nach dem Ladevorgang wieder durch einen Schalter (z.B. Relais) überbrückt werden, um elektrisch Energieverluste während des Betriebs des Hausgeräts 100 zu vermeiden.

Bei der in Fig. 1b dargestellten Schaltanordnung 120 können z.B. im Standby Modus durch die Filtereinheit 140 10mW bis 40mW Verlustleistung verursacht werden. Wie in Fig. 2 dargestellt, können die Filtereinheit 140 und die damit verbundene Verlustleistung durch das Verlegen des vierten Schaltelements 124 schaltbar ausgeführt werden. Ferner kann die erste Last 111 (z.B. ein Heizwiderstand) als laststromlimitierendes Element verwendet werden. Das erste Schaltelement 121 kann anstatt als Schließer als Wechsler 221 ausgeführt werden.

Zum Einschalten des Filters 140 und des Lastschaltkreises kann zunächst das zweite Schaltelement 122 geschlossen werden, wodurch sich eine Ladepfad zum Laden der ein oder mehreren Filter-Kondensatoren 141 über die erste Last 111 und über das zweite Schaltelement 122 ergibt. Nach einer bestimmten Lade-Zeitdauer kann das vierte Schaltelement 124 geschlossen werden, und als Folge daraus ist der Einschaltvorgang zum Einschalten des Filters 140 abgeschlossen. Die Schaltelemente 221, 122 sind nun wieder vollständig für die Steuerung der ersten Last 111 verfügbar.

Die Sicherung 125 kann dazu genutzt werden, einen möglichen Fehler abzudecken, bei dem die beiden Kontakte des Wechsel-Schaltelements 221 kurzgeschlossen werden.

Die in diesem Dokument beschriebene Schaltanordnung 120 ermöglicht die Nutzung eines Schaltelements 124 (das auch zur Steuerung der zweiten Last 112 verwendet wird) und die Nutzung der ersten Last 111, um die Filtereinheit 140 in zuverlässiger Weise (mit Ladestrombegrenzung) schaltbar zu machen. So kann eine effiziente Ladung von X-Kondensatoren 141 und/oder Zwischenkreiskondensatoren bewirkt werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Schaltanordnung und/oder des vorgeschlagenen Hausgeräts veranschaulichen sollen.

## Patentansprüche

1. Schaltanordnung (120) zum Schalten eines Filter-Kondensators (141); wobei die Schaltanordnung (120) umfasst,
- eine erste Versorgungsleitung (131) und eine zweite Versorgungsleitung (132), zwischen denen eine Versorgungsspannung (103) anliegt;
- eine erste elektrische Last (111);
- ein oder mehrere Schaltelemente (122, 221), die ausgebildet sind, die erste elektrische Last (111) mit der Versorgungsspannung (102) zu koppeln oder davon zu entkoppeln, um die erste elektrische Last (111) einzuschalten oder auszuschalten;
- einen Filter-Kondensator (141) zur Filterung der Versorgungsspannung (103); und
- eine Steuereinheit (200), die eingerichtet ist, zu bewirken, dass
- der Filter-Kondensator (141) in einem Standby-Modus von der Versorgungsspannung (102) entkoppelt wird; und
- der Filter-Kondensator (141) bei Beendigung des Standby-Modus zur Begrenzung eines Ladestroms zumindest zeitweise über die erste elektrische Last (111) mit der Versorgungsspannung (103) gekoppelt wird.

2. Schaltanordnung (120) gemäß Anspruch 1, wobei
- die Schaltanordnung (120) ein viertes Schaltelement (124) umfasst, das ausgebildet ist, einen zweiten Pol des Filter-Kondensators (141) mit der Versorgungsspannung (102) zu koppeln oder davon zu entkoppeln; und
- die Steuereinheit (200) eingerichtet ist, zu bewirken, dass das vierte Schaltelement (124) geöffnet wird, um den Filter-Kondensator (141) in dem Standby-Modus von der Versorgungsspannung (102) zu entkoppeln.

3. Schaltanordnung (120) gemäß Anspruch 2, wobei
- die Schaltanordnung (120) ein zweites Schaltelement (122) umfasst, das ausgebildet ist, einen zweiten Pol der ersten Last (111) mit der zweiten Versorgungsleitung (132) zu koppeln oder davon zu entkoppeln;
- die Schaltanordnung (120) ein Wechsel-Schaltelement (221) umfasst, das ausgebildet ist, die erste Versorgungleitung (131) selektiv mit einem ersten Pol der ersten Last (111) oder mit dem zweiten Pol des Filter-Kondensators (141) zu koppeln; und
- die Steuereinheit (200) eingerichtet ist, zu bewirken, dass
- durch das zweite Schaltelement (122) der zweite Pol der ersten Last (111) mit der zweiten Versorgungsleitung (132) gekoppelt wird; und
- durch das Wechsel-Schaltelement (221) der erste Pol der ersten Last (111) mit dem zweiten Pol des Filter-Kondensators (141) gekoppelt wird,
sodass der Filter-Kondensator (141) bei Beendigung des Standby-Modus zur Begrenzung des Ladestroms über die erste elektrische Last (111) mit der Versorgungsspannung (103) gekoppelt wird.

4. Schaltanordnung (120) gemäß Anspruch 3, wobei die Steuereinheit (200) eingerichtet ist, nach einer Lade-Zeitdauer zu bewirken, dass das vierte Schaltelement (124) geschlossen wird, sodass der zweite Pol des Filter-Kondensators (141) an der ersten Last (111) vorbei mit der zweiten Versorgungsleitung (132) gekoppelt wird.

5. Schaltanordnung (120) gemäß Anspruch 4, wobei die Steuereinheit (200) eingerichtet ist, nach der Lade-Zeitdauer zu bewirken, dass durch das Wechsel-Schaltelement (221) der erste Pol der ersten Last (111) mit der ersten Versorgungsleitung (131) gekoppelt wird.

6. Schaltanordnung (120) gemäß einem der Ansprüche 4 bis 5, wobei die Steuereinheit (200) eingerichtet ist,
- zu ermitteln, ob die erste elektrische Last (111) betrieben werden soll oder nicht; und
- in Abhängigkeit von dem Ermitteln, zu bewirken, dass das zweite Schaltelement (122) geschlossen ist, um die elektrische Last (111) zu betreiben, oder geöffnet ist, um die elektrische Last (111) nicht zu betreiben.

7. Schaltanordnung (120) gemäß einem der Ansprüche 2 bis 6, wobei
- die Schaltanordnung (120) eine Sicherung (125) umfasst; und
- das vierte Schaltelement (124) ausgebildet ist, den zweiten Pol des Filter-Kondensators (141) über die Sicherung (125) mit der zweiten Versorgungsleitung (132) zu koppeln.

8. Schaltanordnung (120) gemäß einem der vorhergehenden Ansprüche, wobei
- der Filter-Kondensator (141) ausgebildet ist, auf Basis der Versorgungsspannung (103) eine gefilterte Versorgungsspannung (133) bereitzustellen; und
- die Schaltanordnung (120) eine zweite elektrische Last (112) und ein drittes Schaltelement (123) umfasst, wobei das dritte Schaltelement (123) ausgebildet ist, die zweite Last (112), insbesondere einen ersten Pol der zweiten Last (112), mit der gefilterten Versorgungsspannung (133) zu koppeln oder davon zu entkoppeln.

9. Schaltanordnung (120) gemäß Anspruch 8, wobei die zweite elektrische Last (112) einen Wechselrichter oder ein Magnetron umfasst.

10. Schaltanordnung (120) gemäß einem der vorhergehenden Ansprüche, wobei die Schaltanordnung (120) eine Filtereinheit (140) mit dem Filter-Kondensator (141) und mit ein oder mehreren Filter-Induktivitäten (142) umfasst.

11. Schaltanordnung (120) gemäß einem der vorhergehenden Ansprüche, wobei die Versorgungsspannung (103) eine Wechselspannung ist.

12. Schaltanordnung (120) gemäß einem der vorhergehenden Ansprüche, wobei die erste Last (111) ein Heizelement, insbesondere einen Heizwiderstand, umfasst.

13. Hausgerät (100), das die Schaltanordnung (120) gemäß einem der vorhergehenden Ansprüche umfasst.

14. Hausgerät (100) gemäß Anspruch 13, wobei
- das Hausgerät (100) ausgebildet ist, die erste elektrische Last (111) sowohl zur Begrenzung des Ladestroms in den Filter-Kondensator (141) bei Aktivierung des Hausgeräts (100) aus dem Standby-Modus als auch zur Bereitstellung einer Funktion des Hausgeräts (100) nach Aktivierung des Hausgeräts (100) zu nutzen; und
- die Funktion insbesondere eine Heizfunktion zum Aufheizen von Wasser und/oder zum Aufheizen eines Garraums des Hausgeräts (100) umfasst.
